# EUROPEAN PATENT APPLICATION

(11) **EP 2 860 684 A1**
(43) Date of publication of application: **15.04.2015**
(21) Application number: 13816637.6
(22) Date of filing: 12.07.2013
(51) Int. Cl.: G06Q 30/02

(54) **SERVER DEVICE, SERVER PROGRAM, AND GAME PROGRAM**

(30) Priority: 13.07.2012 JP 2012158110
(71) Applicant: KABUSHIKI KAISHA SEGA doing business as SEGA CORPORATION, Ohta-ku Tokyo 144-8531 (JP)
(72) Inventor: ITO,Manato, Tokyo 140-8583 (JP); KUROSAWA,Hiroyuki, Tokyo 140-8583 (JP)
(74) Representative: Regimbeau
(86) International application number: PCT/JP2013/069216
(87) International publication number: WO 2014/010739

(57) **Abstract**

A technique is provided for enabling implementation of promotion measures using advertisement codes and invite codes even in a distribution environment that prohibits a user from inputting a code and the like within a game application. The technique includes means for issuing an advertisement code to be posted on an advertisement medium or an invite code issued in response to a request from a user, means for generating a parameter for associating the advertisement code or the invite code with a predetermined reward, and means for generating page data and returning the page data upon being accessed by a browser application of a terminal device based on an address specified by the advertisement code or the invite code. The page data is associated with a description of operations for passing the parameter corresponding to the advertisement code or the invite code and starting a predetermined game application.

## Description

### TECHNICAL FIELD

The present invention relates to a technique for controlling a game on a terminal device via a network.

### BACKGROUND ART

So-called advertisement codes and invite codes are known techniques for promoting the use of a game app (game application program) that is run on a terminal device.

Advertisement codes are typically character strings accompanying endorsement statements and the like that are posted on magazine advertisements and online advertisements, for example. A user that views such an advertisement may download/install a predetermined game app (no need to download/install if the game app is already installed), start the game app, and input the advertisement code within the game app. In this way, the user may be given a certain reward such as an item or a capability value, for example.

Invite codes are typically character strings accompanying endorsement statements and the like that are spread via SNS (social networking services) or game app reviews shared by game users (players), for example. A user that acquires an invite code may download/install a predetermined game app (no need to download/install if the game app is already installed), start the game app, and input the invite code within the game app. In this way, the user that has issued the invite code and the user that has received the invite code may each be given a certain reward such as an item or a capability value, for example.

Note that at the time of filing the present application, the inventors of the present invention were unable to find publicly disclosed prior art documents relating to the present invention. Accordingly, prior art document information is not provided herein.

### SUMMARY OF THE INVENTION

### PROBLEM TO BE SOLVED BY THE INVENTION

Although the advertisement codes and invite codes described above are effective techniques for promoting use of a game app, some game app distribution environments artificially implement a policy of prohibiting game apps configured to have a user input a code or the like within the game app to unlock or add a new function or content.

In such distribution environments, promotion measures using advertisement codes and invite codes cannot be implemented.

The present invention has been conceived in view of the foregoing problems associated with the prior art, and it is an object of the present invention to provide a technique for enabling implementation of promotion measures using advertisement codes and invite codes even in a distribution environment that prohibits a user from inputting a code or the like within a game app.

### MEANS FOR SOLVING THE PROBLEM

A technique according to one embodiment of the present invention includes means for issuing an advertisement code to be posted on an advertisement medium or an invite code issued in response to a request from a user, means for generating a parameter for associating the advertisement code or the invite code with a predetermined reward, and means for generating page data and returning the page data upon being accessed by a browser application of a terminal device based on an address specified by the advertisement code or the invite code. The page data is associated with a description of operations for passing the parameter corresponding to the advertisement code or the invite code and starting a predetermined game application.

A technique according to another embodiment of the present invention includes means for issuing an advertisement serial code to be posted on an advertisement medium or an invite serial code issued in response to a request from a user, means for generating a parameter for associating the advertisement serial code or the invite serial code with a predetermined reward, and means for generating page data and returning the page data upon being accessed by a browser application of a terminal device. The page data is associated with a description of operations for passing the parameter corresponding to the advertisement serial code or the invite serial code and starting a predetermined game application.

### ADVANTAGEOUS EFFECT OF THE INVENTION

According to an aspect of the present invention, a user does not have to input a code or the like within a game app, and therefore, promotion measures using advertisement codes and invite codes may be implemented even in a distribution environment that prohibits a user from inputting a code or the like within a game app.

### BRIEF DESCRIPTION OF THE DRAWINGS

FIG. 1 illustrates an exemplary configuration of a system according to an embodiment of the present invention;
FIG. 2 illustrates an exemplary hardware configuration of a terminal device according to an embodiment of the present invention;
FIG. 3 illustrates an exemplary hardware configuration of a server according to an embodiment of the present invention;
FIG. 4 is a sequence chart illustrating an exemplary process according to an embodiment of the present invention;
FIG. 5 illustrates an example of a screen that may be displayed upon accessing a code issue server based on an advertisement code or the like;
FIG. 6 illustrates an example of a screen providing notification that a reward has been reflected;
FIG. 7 is a sequence chart illustrating another exemplary process according to an embodiment of the present invention;
FIG. 8 is a sequence chart illustrating another exemplary process according to an embodiment of the present invention; and
FIG. 9 illustrates another example of a screen that may be displayed upon accessing the code issue server based on an advertisement code or the like.

### EMBODIMENTS FOR IMPLEMENTING THE INVENTION

In the following, embodiments of the present invention are described with reference to the accompanying drawings.

### <Configuration>

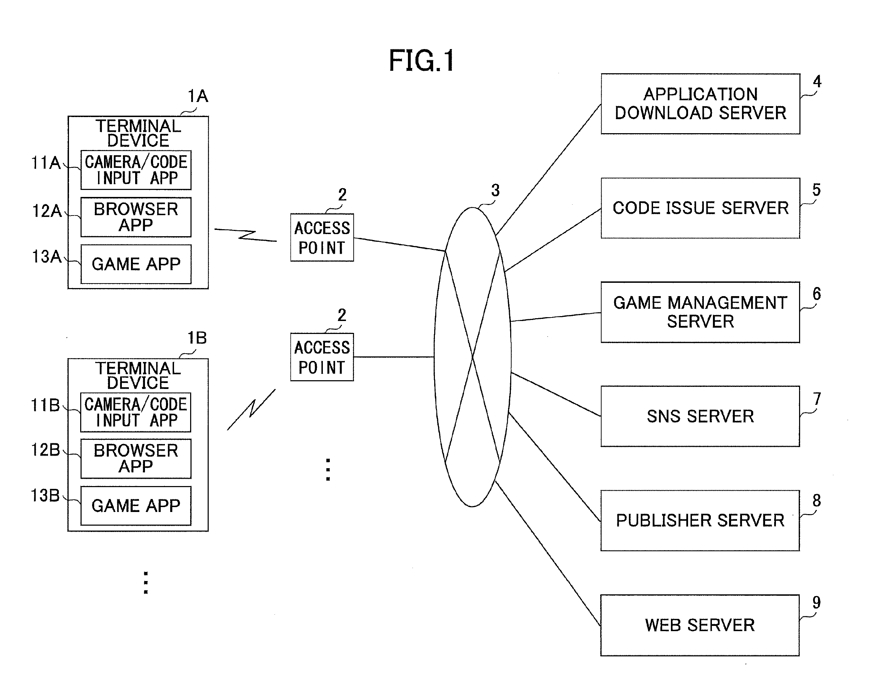

FIG. 1 illustrates an exemplary configuration of a system according to an embodiment of the present invention.

In FIG. 1, the system includes terminal devices 1A and 1B such as a smart phone, a mobile phone, and the like that are owned by users (players); an access point 2 such as a mobile radio base station or a Wi-Fi station; a network 3 such as the Internet; and various types of servers 4-9.

The terminal device 1A includes a camera/code input app (application) 11A, a browser app 12A and a game app 13A.

The terminal device 1B includes a camera/code input app (application) 11B, a browser app 12B and a game app 13B.

The camera/code input app 11A/11B is configured to read an image such as a two-dimensional code using a camera function, extract the code content, and if the code content corresponds to a server address such as a URL (Uniform Resource Locator), pass the code content to the browser app 12A/12B to start the browser app 12A/12B.

The browser app 12A/12B is configured to perform operations such as transmitting form data and requesting/acquiring/displaying page data described in a language such as HTML (Hyper Text Markup Language) in accordance with a standard protocol of the Internet such as HTTP (Hyper Text Transfer Protocol).

The game app 13A/13B is configured to execute a predetermined game.

An application download server 4 stores the game apps 13A and 13B and is configured to download and install the game apps 13A and 13B in the terminal devices 1A and 1B.

The code issue server 5 is configured to issue a unique code specifying a URL for accessing the code issue server 5. The code may be an advertisement code to be posted on an advertisement medium or an invite code issued in response to a request from a user, for example. Also, when the terminal device 1A/1B accesses the code issue server 5 based on an advertisement code or an invite code, the code issue server 5 is configured to generate and return page data including a description of operations for passing a parameter corresponding to the advertisement code or the invite code and starting a predetermined game app. Note that the description of operations may include operations for guiding download and installation of the predetermined game app from the app download server 4 in a case where the predetermined game app is not installed. Note that URL schemes may be used to describe these operations.

The game management server 6 is configured to manage operations such as logging into the game apps 13A and 13B, and giving a reward according to an advertisement code or an invite code, for example. Note that in a case where the code issue server 5 and the game management server 6 are run by the same operation entity, the code issue server 5 and the game management server 6 may be arranged in the same server device, for example.

The SNS server 7 is configured to provide communication services between users.

The publisher server 8 is a server owned by a publisher of a paper-medium magazine, for example.

The web server 9 is configured to provide a web page including an advertisement.

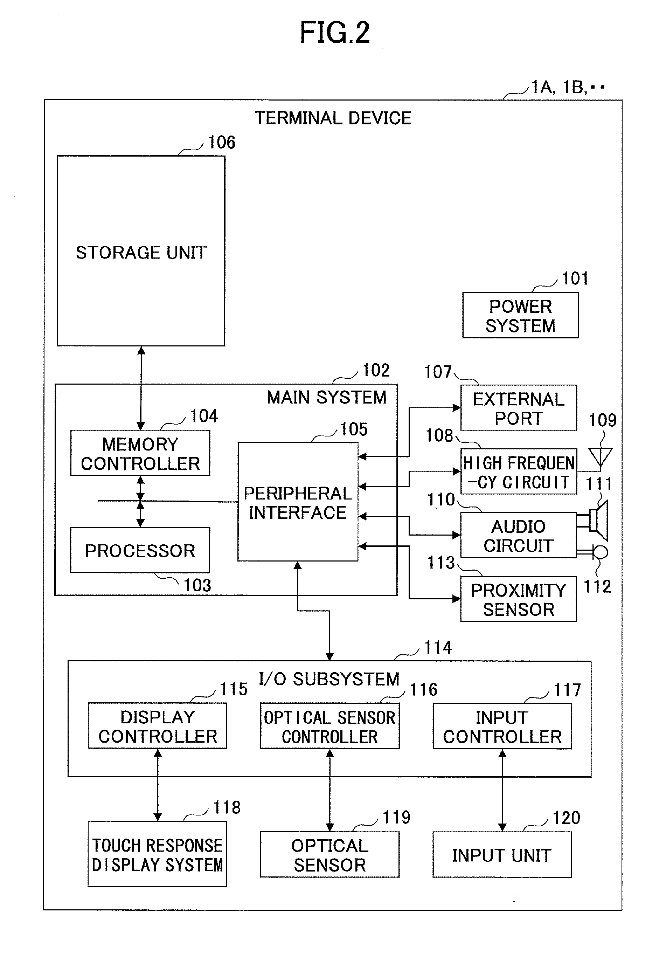

FIG. 2 illustrates an exemplary hardware configuration of the terminal devices 1A and 1B.

In FIG. 2, the terminal device 1A/1B includes a power system 101; a main system 102 including a processor 103, a memory controller 104, and a peripheral interface 105; a storage unit 106; an external port 107; a high frequency circuit 108; an antenna 109; an audio circuit 110; a speaker 111; a microphone 112; a proximity sensor 113; an I/O subsystem 114 including a display controller 115, an optical sensor controller 116, and an input controller 117; a touch response display system 118; an optical sensor 119; and an input unit 120.

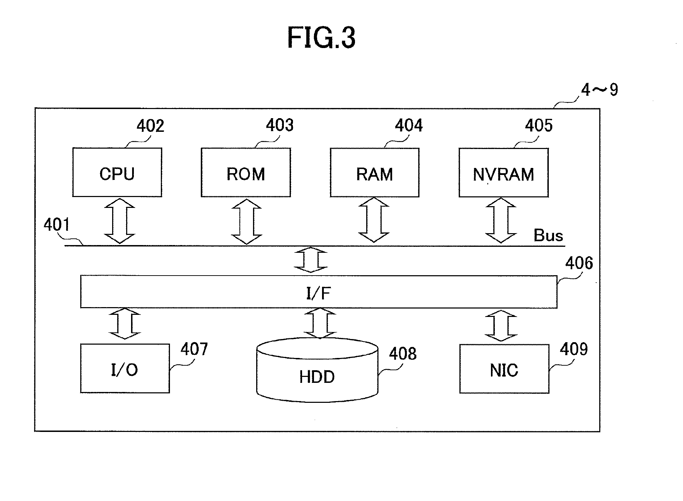

FIG. 3 illustrates an exemplary hardware configuration of the servers 4-9.

In FIG. 3, the servers 4-9 include a CPU (Central Processing Unit) 402, a ROM (Read-Only Memory) 403, a RAM (Random Access Memory) 404, an NVRAM (NonVolatile Random Access Memory) 405, and an I/F (Interface) 406 that are connected to a system bus 401. Also, the servers 4-9 include I/O devices 407 such as a keyboard, a mouse, a monitor, and/or a CD/DVD (Compact Disk/Digital Versatile Disk) drive; a HDD (Hard Disk Drive) 408; and an NIC (Network Interface Card) 409 that are connected to the I/F 406.

### <Operations>

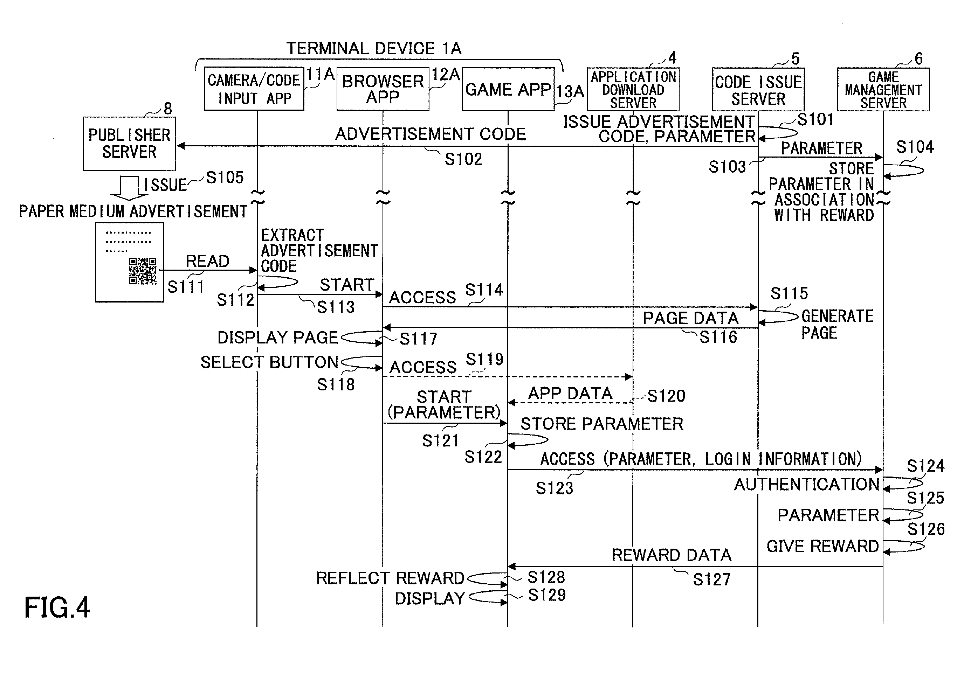

FIG. 4 is a sequence chart illustrating an exemplary process according to an embodiment of the present invention.

In FIG. 4, the code issue server 5 issues an advertisement code specifying a unique URL for each advertisement based on a predetermined format and generation rule, and issues a parameter that uniquely identifies the advertisement code (step S101). The code issue server 5 sends the advertisement code to the publisher server 8 (step S102). Note that in some embodiments, the advertisement code itself may be used as the parameter. Also, in some embodiments, instead of sending the advertisement code, the advertisement code may be delivered to the publisher using an artificial route, for example.

Further, the code issue server 5 sends the generated parameter to the game management server 6 (step S103), and the game management server 6 stores the received parameter in association with a corresponding reward (step S104). The corresponding reward may be determined based on the parameter, or the code issue server 5 may designate the corresponding reward along with the parameter.

The publisher server 8 uses the received advertisement code and a separately conveyed endorsement statement or the like to issue a paper medium advertisement as part of a magazine, for example (step S105).

Thereafter, if a user of the terminal device 1A that obtains the paper medium advertisement becomes interested in the advertisement and wishes to use the advertisement code, the user may have the camera/code input app 11A of the terminal device 1A read the advertisement code from the paper medium advertisement (step S111).

The camera/code input app 11A analyzes the read image and extracts the advertisement code from the read image (step S112). If the extracted code corresponds to a server address such as a URL, the camera/code input app 11A passes the advertisement code to the browser app 12A and starts the browser app 12A (step S113). Note that in some embodiments, the camera/code input app 11A may only be configured to pass the advertisement code to the browser app 12A. In this case, the user may have to perform operations to start the browser app 12A.

The browser app 12A accesses the code issue server 5 with the address specified by the advertisement code (step S114). The code issue server 5 acquires the parameter corresponding to the advertisement code specifying the access URL, generates page data describing operations for passing the acquired parameter and starting a predetermined game app (step S115), and returns the generated page data to the terminal device 1A (step S116). Note that in some embodiments, the code issue server 5 may generate the parameter based on the rule used upon issuing the corresponding advertisement code specifying an access URL. In other embodiments, the advertisement code and the corresponding parameter may be stored in association with each other when they are issued, and the parameter may be obtained based on the stored correspondence information, for example.

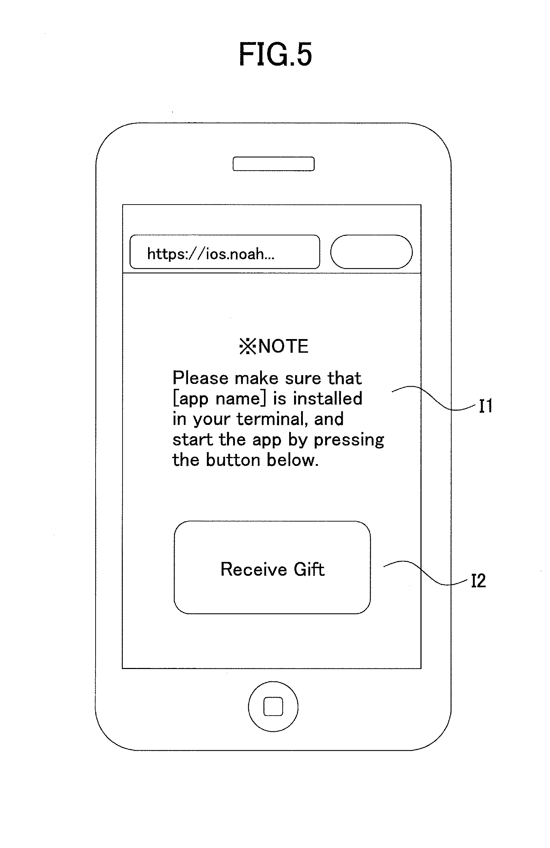

The browser app 12A of the terminal device 1A displays the received page data (step S117). FIG. 5 illustrates an exemplary display screen that includes a display element I1 displaying a "NOTE" and a display element I2 displaying a "Receive Gift" button. The "Receive Gift" button is associated with operations for passing the parameter corresponding to the advertisement code to the game app 13A to start the game app 13A, and operations for guiding download and installation of the game app 13A from the app download server 4 in the case where the game app 13A is not yet installed in the terminal device 1A.

Referring back to FIG. 4, when the user selects the button from the display screen (step S118), if the game app 13A is not installed, the browser app 12A accesses the app download server 4 (step S119), and downloads app data to install the game app 13A (step S120). Then, the browser app 12A returns to the step of displaying the page data (step S117).

When the user selects the button in a state where the game app 13A is installed (step S118), the browser app 12A starts the game app 13A using the parameter according to the description of the operations associated with the button (step S121).

The game app 13A that has been started stores the parameter internally (in the storage unit 106) (step S122), and accesses the game management server 6 based on an address (URL, etc.) that is set up beforehand within the game app 13A (step S123). This involves using the internally stored parameter that has been passed over from the browser app 12A and login information (user ID, password, etc.). Note that the URL for accessing the game management server 6 may be included in the page data generated by the code issue server 5 beforehand. Also, in a case where the game app 13A is used for the first time, for example, and login information does not exist, the game management server 6 may request for input of the login information.

The game management server 6 that has been accessed authenticates the user based on the login information (step S124), and when the user is successfully authenticated, the game management server 6 compares the received parameter with a parameter stored beforehand to check for their consistency (step S125). If consistency is successfully confirmed, the game management server 6 gives a reward associated with the parameter to the game app 13A of the terminal device 1A (step S126). The step of giving the reward may include generating and acquiring reward data that is used to reflect the reward at the terminal device 1A, and updating a record if the giving of rewards is tracked and recorded as part of user history, for example.

The game management server 6 sends the reward data to the game app 13A of the terminal device 1A (step S127), and the game app 13A reflects the reward earned based on the received reward data (step S128). For example, game management information may be updated to reflect an addition of an item or an increase in a capability value.

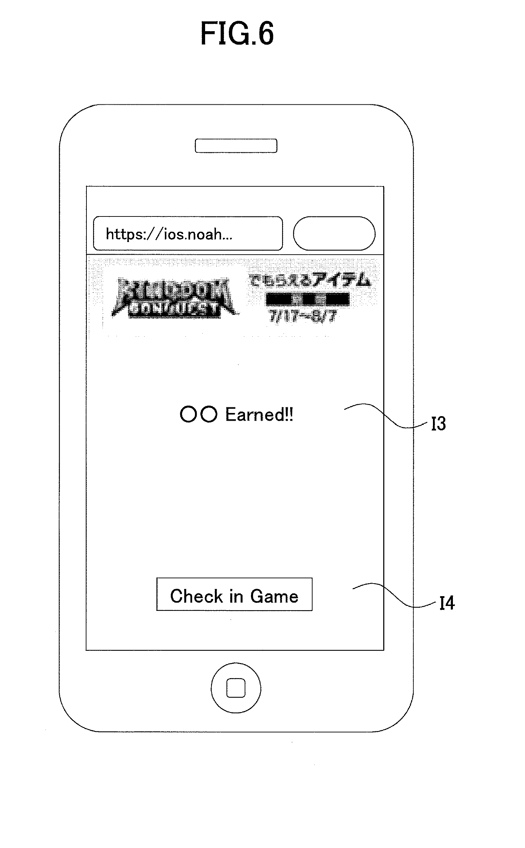

When the reward is reflected, the game app 13A displays a screen including a notification that the reward has been reflected (step S129). FIG. 6 illustrates an exemplary screen providing notification that the reward has been reflected. The screen of FIG. 6 includes a display element I3 displaying a message "○○ Earned!" and a display element I4 displaying a "Check in Game" button. If the "Check in Game" button is pressed, the game is started to enable the user to play the game, and the user may thus verify that the reward is reflected in a display of the game. Note that in some embodiments, audio may be used to provide notification that the reward has been reflected, for example.

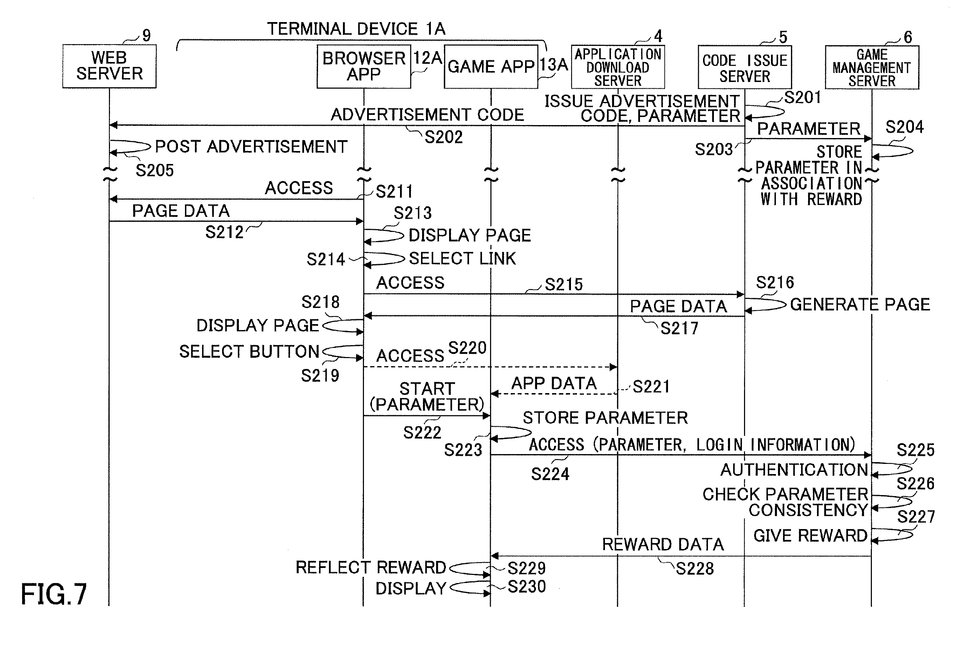

FIG. 7 is a sequence chart illustrating another exemplary process according to an embodiment of the present invention in a case where an advertisement code is posted on a web page.

In FIG. 7, the code issue server 5 issues an advertisement code specifying a unique URL for each advertisement based on a predetermined format and generation rule, and issues a parameter that uniquely identifies the advertisement code (step S201). The code issue server 5 sends the advertisement code to the web server 9 (step S202). Note that in some embodiments, the advertisement code itself may be used as the parameter. Also, instead of sending the advertisement code, the advertisement code may be delivered to the web server 9 using an artificial route, for example.

Also, the code issue server 5 sends the generated parameter to the game management server 6 (step S203), and the game management server 6 stores the received parameter in association with a corresponding reward (step S204). The corresponding reward may be determined from the parameter, or the code issue server 5 may designate the reward along with the parameter, for example.

Based on the received advertisement code and a separately conveyed endorsement statement, for example, the web server 9 posts an advertisement on a web page (step S205).

Thereafter, when the user of the terminal device 1A accesses the web server 9 through the browser app 12A (step S211), the web server 9 returns page data of a web page to the browser app 12A (step S212), and the browser app 12A displays the web page (step S213).

When the user of the terminal device 1A that has viewed the advertisement from the web page becomes interested in the advertisement and wishes to use the advertisement code, the user may select a link corresponding to the advertisement code within the web page (step S214). Note that in some embodiments, the advertisement code, which may be displayed on a monitor of a PC (Personal Computer), for example, may be read by the camera/code input app 11A of the terminal device 11A. In such case, operations similar to those illustrated in FIG. 4 may be performed.

In FIG. 7, the browser app 12A accesses the code issue server 5 based on the address specified by the advertisement code (step S215), and the code issue server 5 obtains the parameter corresponding to the advertisement code specifying the access URL, generates page data describing operations for passing the parameter and starting a predetermined game app (step S216), and returns the generated page data to the terminal device 1A (step S217). The code issue server 5 may generate the parameter based on the rule used upon issuing the advertisement code specifying the access URL, or the advertisement code and the corresponding parameter may be stored in association with each other when they are issued and the parameter may be obtained based on the correspondence information, for example.

The browser app 12A of the terminal device 1A displays the page data that has been received (step S218). The corresponding display screen of the terminal device 1A may be similar to that illustrated in FIG. 5 and may include a "NOTE" and a "Receive Gift" button as display elements. The "Receive Gift" button is associated with a descriptions of operations for passing the parameter corresponding to the advertisement code and starting the game app 13A, and operations for guiding download and installation of the game app 13A from the app download server 4 in the case where the game app 13A is not installed.

Referring back to FIG. 7, when the user selects the button from the display screen (step S219), if the game app 13A is not installed, the browser app 12A accesses the app download server 4 (step S220) and downloads app data to install the game app 13A (step S221). Then, the browser app 12A returns to the step of displaying the page data (step S218).

When the user selects the button in a state where the game app 13A is installed (step S219), the browser app 12A starts the game app 13A using the parameter according to the description of the operations associated with the button (step S222).

The game app 13A that has been started stores the parameter internally (in the storage unit 106) (step S223), and accesses the game management server 6 based on an address (URL, etc.) that has been set up beforehand in the game app 13A (step S224). This involves using the internally stored parameter that has been passed from the browser app 12A and login information (user ID, password, etc.). Note that in some embodiments, the URL for accessing the game management server 6 may be included in the page data generated by the code issue server 5. Note, also, that in a case where the game app 13A is used for the first time, for example, and login information does not exist, the game management server 6 may request for input of the login information.

The game management server 6 that has been accessed authenticates the user based on the login information (step S225), and when the user is successfully authenticated, the game management server 6 compares the received parameter with a parameter stored in advance to check for their consistency (step S226). When their consistency is successfully confirmed, the game management server 6 gives a reward associated with the parameter to the game app 13A of the terminal device 1A (step S227). Note that the step of giving the reward may include generating and acquiring reward data to be used to reflect the reward at the terminal device 1A, and updating a record if the giving of rewards is tracked and recorded as part of the user history, for example.

The game management server 6 sends the reward data to the game app 13A of the terminal device 1A (step S228), and the game app 13A reflects the reward based on the received reward data (step S229). For example, the game app 13A may update game management information to reflect the addition of an item or an increase in a capacity value.

When the reward is reflected, the game app 13A displays a notification that the reward has been reflected (step S230). The corresponding display screen may be similar to that illustrated in FIG. 6. Note that in some embodiments, audio may be used to provide the notification that the reward has been reflected, for example.

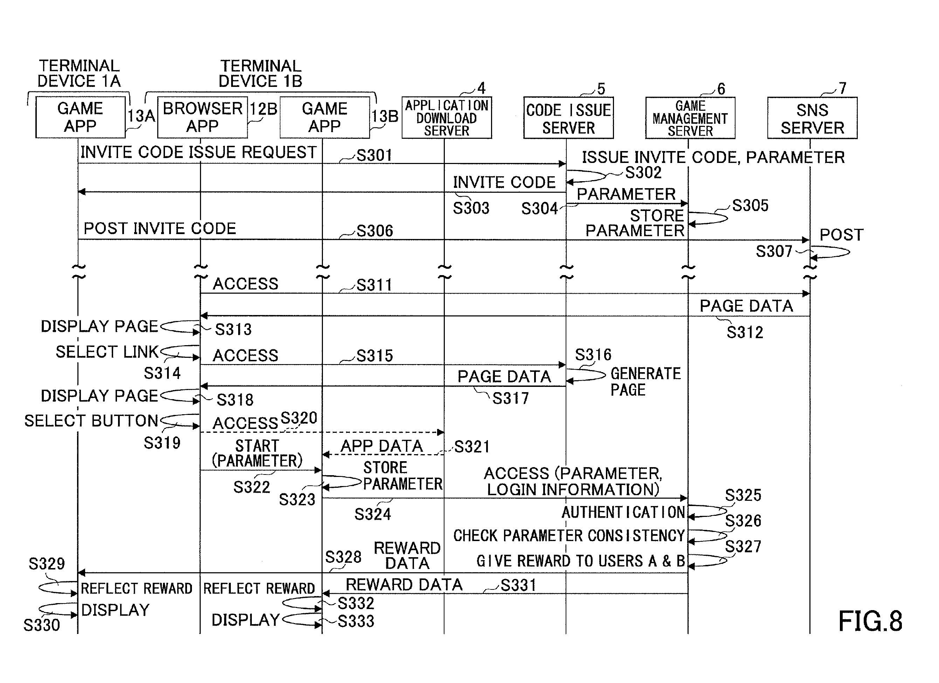

FIG. 8 is a sequence chart illustrating another exemplary process according to an embodiment of the present invention in a case where an invite code is spread using SNS.

In FIG. 8, when the user of the terminal device 1A wishes to issue an invite code, the user sends an invite code issue request to the code issue server 5 based on an address (URL, etc.) that is internally set up in the game app 13A beforehand (step S301).

Upon receiving the invite code issue request, the code issue server 5 issues an invite code corresponding to a unique URL based on a predetermined format and generation rule, and issues a parameter that uniquely identifies the invite code (step S302). The code issue server 5 sends the invite code to the game app 13A of the terminal device 1A (step S303). Note that in some embodiments, the invite code itself may be used as the parameter.

Also, the code issue server 5 sends the generated parameter to the game management server 6 (step S304), and the game management server 6 stores the received parameter in association with a corresponding reward and the address of the user issuing the code (or user ID if membership information is separately managed) (step S305). The corresponding reward may be determined based on the parameter, or the code issue server 5 may designate the corresponding reward along with the parameter, for example. Also, in some embodiments, different rewards may be given to the user that has issued the invite code and a user that uses the invite code, for example.

The user of the terminal device 1A that has received the issued invite code posts the invite code on the SNS server 7, which may be predetermined or selected by the user, via the game app 13A (step S306). Note that an endorsement statement or the like may accompany the posted invite code.

The SNS server 7 that receives the invite code and the endorsement statement posts a message including the invite code and the endorsement statement on a message board (step S307).

Thereafter, when a user of another terminal device 10B accesses the SNS server 7 via the browser app 12B (step S311), page data of the message content is returned to the browser app 12B (step S312), and the browser app 12B displays a message page based on the page data (step S313).

If the user of the terminal device 1B that views the invite code from the message page becomes interested in the message content and wishes to use the invite code, the user may select a link corresponding to the invite code included in the message page (step S314). Note that in some embodiments, the invite code may be read by the camera/code input app 11B of the terminal device 1B from the message page displayed on a monitor of a PC, for example. In this case, operations similar to those illustrated in FIG. 4 may be performed.

In FIG. 8, the browser app 12B accesses the code issue server 5 based on the address specified by the invite code (step S315), the code issue server 5 acquires the parameter corresponding to the invite code specifying the access URL, generates page data describing operations for passing the parameter and starting a predetermined game app (step S316), and returns the page data to the terminal device 1B (step S317). The code issue server 5 may generate the parameter based on the rule used upon issuing the invite code specifying the access URL, or the invite code and the corresponding parameter may be stored in association with each other at the time they are issued and the code issue server 5 may obtain the corresponding parameter based on the correspondence information, for example.

The browser app 12B of the terminal device 1B displays the page data that has been received (step S318). The corresponding display screen may be similar to that illustrated in FIG. 5 and includes a "NOTE" and a "Receive Gift" button as display elements. The "Receive Gift" button is associated with a description of operations for passing the parameter corresponding to the invite code and starting the game app 13B, and operations for guiding download and installation of the game app 13B from the application download server 4 if the game app 13B is not installed.

Referring back to FIG. 8, when the user selects the button from the display screen (step S319), if the game app 13B is not installed, the browser app 12B accesses the application download server 4 (step S320), and downloads application data to install the game app 13B (step S321). Then, the browser app 12B returns to the step of displaying the page data (step S318).

When the user selects the button in a state where the game app 13B is installed (step S319), the browser app 12B starts the game app 13B using the parameter according to the description of the operations associated with the button (step S322).

The game app 13B that has been started stores the parameter internally (in the storage unit 106) (step S323), and accesses the game management server 6 based on an address (URL, etc.) that has been set up beforehand in the game app 13B (step S324). This may involve using the internally stored parameter passed from the browser app 12B and login information (user ID, password, etc.). Note that in some embodiments, the URL for accessing the game management server 6 may be included in the page data generated by the code issue server 5. Also, note that in a case where the game app 13B is used for the first time, for example, and login information does not exist, the game management server 6 may request for input of the login information.

The game management server 6 that has been accessed authenticates the user based on the login information (step S325), and when the user is successfully authenticated, the game management server 6 compares the received parameter with a parameter stored beforehand to check for their consistency (step S326). If consistency of the parameters is successfully confirmed, the game management server 6 gives a reward associated with the parameter to the game app 13B of the terminal device 1B (step S327). The step of giving the reward may include generating and acquiring reward data to be used to reflect the reward at the terminal device 1B, and updating a record if the giving of rewards is tracked and recorded as part of the user history.

The game management server 6 sends the reward data to the game app 13A of the terminal device 1A that has issued the invite code (step S328), the game app 13A reflects the reward based on the received reward data (step S329). When the reward is reflected, the game app 13A displays a notification that the reward has been reflected (step S330). The corresponding display screen may be similar to that illustrated in FIG. 6. Note that in some embodiments, audio may be used to provide the notification that the reward has been reflected. Also, if login access to the game app 13A of the terminal device 1A is not made at the time, transmission of the reward data and reflection/display of the reward may be performed at the time the user of the terminal device 1A logs into the game app 13A.

Referring back to FIG. 8, the game management server 6 similarly sends the reward data to the game app 13B of the terminal device 1B that has used the invite code (step S331), and the game app 13B reflects the corresponding reward based on the received reward data (step S332) and displays a notification that the reward has been reflected (step S333). Note that in some embodiments, audio may be used to provide the notification that the reward has been reflected, for example.

In the embodiments described above, a unique URL specifying the code issue sever 5 as the access destination is issued by the code issue server 5 as an advertisement code or an invite code. However, the present invention is not limited to these embodiments, and in other embodiments, the URL for accessing the code issue server 5 may be a common URL, and a unique serial code that may be manually input may be issued as an advertisement code or an invite code. In this case, the advertisement code or invite code in FIGS. 4, 7, and 8, may correspond to a character string of a length enabling manual input, and such a character string may be used as an advertisement serial code or an invite serial code. Also, the advertisement serial code or invite serial code itself may be directly used as a corresponding parameter, or the advertisement serial code or invite serial code may be altered according to a predetermined rule to generate the corresponding parameter, for example. Note that in this case, the URL of the code issue server 5 is passed along with the advertisement serial code or invite serial code.

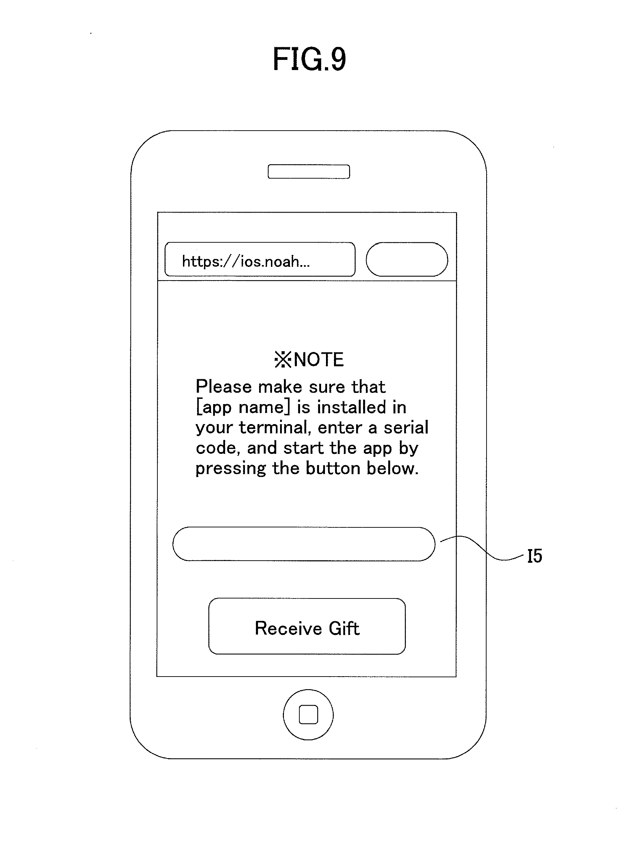

In the case of using an advertisement serial code or an invite serial code, a serial code input field such as that displayed within a display element I5 in FIG. 9 may be displayed in step S117 of FIG. 4, step S218 of FIG. 7, and step S318 of FIG. 8, for example. Further, the input serial code may be directly used as a corresponding parameter, or an altered version of the input serial code may be used as the corresponding parameter.

### <Summary>

As described above, according to an embodiment of the present invention, a user does not have to input a code or the like within a game app, and therefore, promotion measures using advertisement codes and invite codes may be implemented even in a distribution environment that prohibits a user from inputting a code within a game app, for example.

Although the present invention has been described above with respect to certain illustrative embodiments, the present invention is not limited to these embodiments and numerous variations and modifications may be made without departing from the scope of the present invention. That is, the above description of specific embodiments and the accompanying drawings are provided for illustrative purposes and should not be construed to limit the scope of the present invention.

### DESCRIPTION OF THE REFERENCE NUMERALS

- 1A, 1B: terminal device
- 11A, 11B: browser app
- 12A, 12B: game app
- 2: access point
- 3: network
- 4: app download server
- 5: code issue server
- 6: game management server
- 7: SNS server
- 8: publisher server
- 9: web server

## Claims

1. A server device **characterized by** comprising:
means for issuing an advertisement code to be posted on an advertisement medium or an invite code issued in response to a request from a user;
means for generating a parameter for associating the advertisement code or the invite code with a predetermined reward; and
means for generating page data and returning the page data upon being accessed by a browser application of a terminal device based on an address specified by the advertisement code or the invite code, the page data being associated with a description of operations for passing the parameter corresponding to the advertisement code or the invite code and starting a predetermined game application.

2. A server device **characterized by** comprising:
means for issuing an advertisement serial code to be posted on an advertisement medium or an invite serial code issued in response to a request from a user;
means for generating a parameter for associating the advertisement serial code or the invite serial code with a predetermined reward; and
means for generating page data and returning the page data upon being accessed by a browser application of a terminal device, the page data being associated with a description of operations for passing the parameter corresponding to the advertisement serial code or the invite serial code and starting a predetermined game application.

3. A server program that is executable by a computer included in a server device, the server program when executed causing the computer to function as:
means for issuing an advertisement code to be posted on an advertisement medium or an invite code issued in response to a request from a user;
means for generating a parameter for associating the advertisement code or the invite code with a predetermined reward; and
means for generating page data and returning the page data upon being accessed by a browser application of a terminal device based on an address specified by the advertisement code or the invite code, the page data being associated with a description of operations for passing the parameter corresponding to the advertisement code or the invite code and starting a predetermined game application.

4. A server program that is executable by a computer included in a server device, the server program when executed causing the computer to function as:
means for issuing an advertisement serial code to be posted on an advertisement medium or an invite serial code issued in response to a request from a user;
means for generating a parameter for associating the advertisement serial code or the invite serial code with a predetermined reward; and
means for generating page data and returning the page data upon being accessed by a browser application of a terminal device, the page data being associated with a description of operations for passing the parameter corresponding to the advertisement serial code or the invite serial code and starting a predetermined game application.

5. A game program that is executable by a computer included in a terminal device, the game program when executed causing the computer to function as:
means for acquiring an advertisement code posted on an advertisement medium or an invite code issued in response to a request from a user;
means for accessing a server device based on an address specified by the advertisement code or the invite code, and acquiring page data associated with a description of operations for passing a parameter associating the advertisement code or the invite code with a predetermined reward and starting a predetermined game application; and
means for accessing the server device using the parameter according to the description of the operations associated with the acquired page data, and after having the parameter checked for consistency with a parameter stored in the server device, receiving the predetermined reward associated with the parameter.

6. A game program that is executable by a computer included in a terminal device, the game program when executed causing the computer to function as:
means for acquiring an advertisement serial code posted on an advertisement medium or an invite serial code issued in response to a request from a user;
means for accessing a server device, and acquiring page data associated with a description of operations for passing a parameter associating the advertisement serial code or the invite serial code with a predetermined reward and starting a predetermined game application; and
means for accessing the server device using the parameter according to the description of the operations associated with the acquired page data, and after having the parameter checked for consistency with a parameter stored in the server device, receiving the predetermined reward associated with the parameter.
